# EUROPEAN PATENT APPLICATION

(11) **EP 1 178 402 A1**
(43) Date of publication of application: **06.02.2002**
(21) Application number: 00306632.1
(22) Date of filing: 03.08.2000
(51) Int. Cl.: G06F 9/445

(54) **Method and apparatus for actively updating program file(s) of a client computer**

(71) Applicant: Hsing Tech Enterprises Co., Ltd., Taipei City, Taiwan (TW)
(72) Inventor: Fu, Frank, Shihlin, Taipei City, Taiwan (TW)
(74) Representative: Stonehouse, Sidney William

(57) **Abstract**

A service server (20) actively reads the model of the hardware of the client computer (11), e.g. a personal computer, and searches out a new version program file(s) corresponding to the model of the hardware of the client computer. The service server actively downloads the new version program file(s) to the client computer for updating if the program file(s) currently used in the hardware of the client computer is an older version. The invention actively and accurately selects the newly revised version of program file(s) and keeps the client computer always working in the newest revised version of program file(s), so as to eliminate human error and lessen service burden from the hardware provider.

## Description

### BACKGROUND OF THE INVENTION

The present invention relates to a method and apparatus for actively updating program file(s) used in a client computer, for example, automatically updating BIOS for motherboard, driver program(s) for computer peripheral apparatus. The client computer can be a personal computer, a mobile Internet communication apparatus (for example WAP mobile telephone), and etc.

When the CPU (central processing unit) of a client computer is upgraded, or the user himself replaces the peripheral apparatus (hard diskdrive, CD-ROM player, display card, etc.) of the client computer, the program file(s) for running the hardwares such as BIOS (basic input/output system) or driver programs must be updated if the old version of program file(s) do not support the new hardwares. Updating the program file(s) is complicated. If the user is not familiar with the procedure of updating the program file(s), the user always ask the hardware provider for help, or he would shut-down his facilities. Recently, some hardware providers provide the new version of program files in their web sites for user's download. However, this measure hardly cannot eliminate human error. If the user downloads the wrong program file(s) for a different model or runs a wrong procedure when updating the program file(s), a starting or driving error will occur. In this case, the user may ask more service support from the hardware provider, which increases more service burden.

### SUMMARY OF THE INVENTION

The present invention has been accomplished under the circumstances in view. It is one object of the present invention to provide a method and apparatus for actively updating program file(s) of a client computer, which automatically accurately selects the newly revised version of program file(s) and keeps the client computer working with the newly revised version of program file(s), so as to eliminate human error and lessen service burden from the hardware provider. The method of the present invention comprises the step of connecting the client computer to Internet, the step of connecting the client computer to a service server, the step of driving the service server to read the model of the hardware of the client computer and to search out the new version of program file(s) corresponding to the model of the hardware of the client computer, and to read out the current version of program file(s) currently used in the hardware of the client computer, the step of comparing the searched out new version program file(s) with the program file(s) currently used in the hardware of the client computer to see which is newer, and the step of downloading the new version program file(s) to the client computer if the searched out new version program file(s) is newer than the program file(s) currently used in the hardware of the client computer. The steps are proceeded in the background of the screen of the client computer automatically. The steps also can be operated by the user step by step in the foreground. The client computer can be set to automatically execute the updating procedure upon receiving the new version program file(s). Alternatively, the client computer can be set to give a notice to the user upon receiving the new version program file(s) from the service server, enabling the user to update the new version program file(s) manually. The service server comprises a fetching device to read the model of the hardware of the client computer and to search out the new version program file(s) corresponding to the model of the hardware of the client computer, and to read out the current version of program file(s) currently used in the hardware of the client computer, a comparator to compare the searched out new version program file(s) with the program file(s) currently used in the hardware of the client computer to see if which is newer, and an output device to download the new version program file(s) to the client computer if the new version program file(s) is newer than the program file(s) currently used in the hardware of the client computer. The newly revised version program file(s) can be stored in the service server, provider's web site, updating compack-disk from hardware provider, etc.

### BRIEF DESCRIPTION OF THE DRAWINGS

FIG. 1 illustrates the application of the present invention in Internet.
FIG. 2 illustrates the architecture of the service server according to the present invention.
FIG. 3 is a flow chart explaining the operation of the present invention.

### DETAILED DESCRIPTION OF THE PREFERRED EMBODIMENT

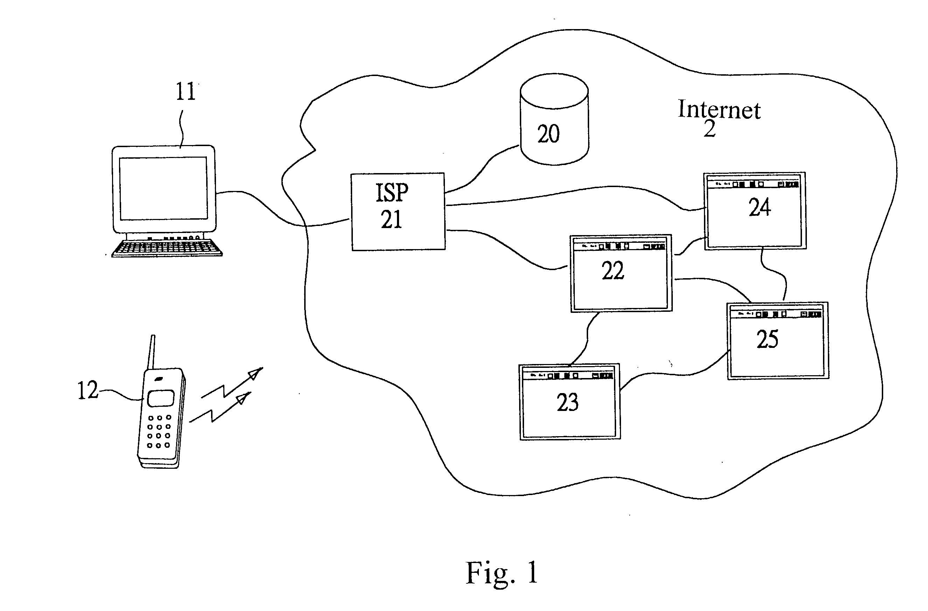

FIG. 1 illustrates an embodiment of the present invention in Internet **2**. In this embodiment, the client computer is a personal computer **11** using a telephone line to link to Internet (alternatively, ISDN connection or wireless Internet connection by a WAP cellular telephone **12** may be employed). At first, the personal computer **11** uses a dial-up program to register to the ISP (Internet service provider) **21**. When the registration accepted, the personal computer **11** is connected to Internet through the ISP **21**, and allowed to browse web sites **22**, **23**, **24**, and **25** etc. This operation is of the prior art.

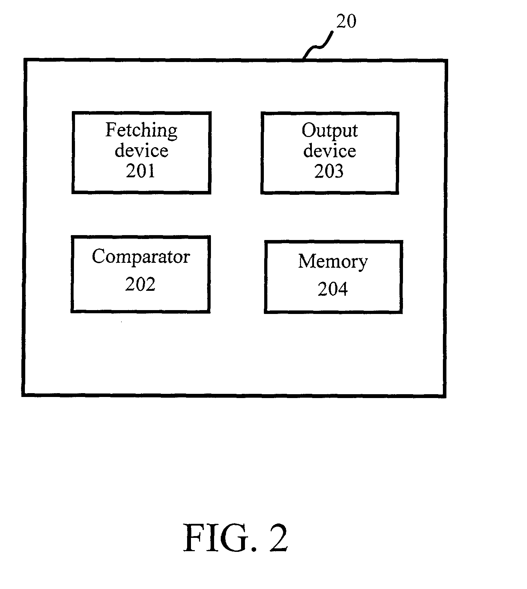

Referring to FIG. 2 and FIG. 1 again, the highlighted technique of the present invention relative to the prior art is the personal computer **11** automatically connects to a service server **20** in the background. The service server **20** comprises a fetching device **201**, a comparator **202**, an output device **203**, and a memory **204**. The fetching device **201** is adapted to read the model of the hardware of the personal computer **11** and to search out the new version program file(s) corresponding to the model of the hardware of the personal computer **11**, and to read out the current version program file(s) currently used in the hardware of the personal computer **11**. The aforesaid new version or currently used program file(s) is required for running the hardware of the personal computer **11**, such as BIOS, harddisk driver program, sound card driver program, etc. The comparator **202** is adapted to compare the searched out new version program file(s) with the currently used program file(s) to see if which one is newer. The output device **203** is adapted to download the new version program file(s) to the personal computer **11** if the new version program file(s) is newer than the currently used program file(s). The memory **204** is adapted to store the new version program file(s).

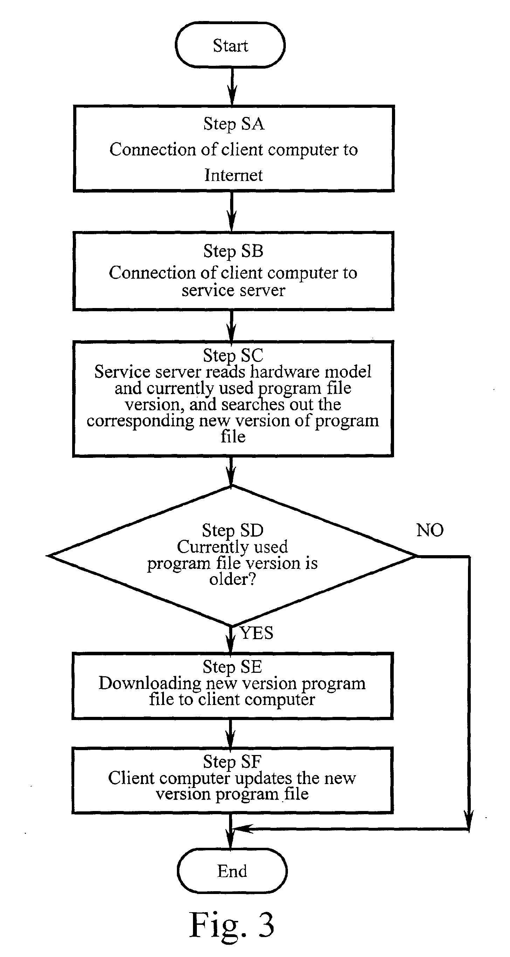

FIG. **3** explains an operation flow chart of the present embodiment in updating BIOS (basic input/output system) required for running the motherboard of the personal computer **11**. When successfully connected to Internet (**step SA**), the personal computer **11** connects to the service server **20** automatically in the background (**Step SB**). After connection of the personal computer **11** to the service server **20**, the fetching device **201** of the service server **20** automatically reads the model of the motherboard of the personal computer **11**, searches out the corresponding new version BIOS from the memory **204**, and reads out the current version BIOS used in the motherboard of the personal computer **11** (**Step SC**). Thereafter, the comparator **202** compares the two versions to see which is newer (**Step SD**). The rule of comparison can be based on revision number, date of file, or file name, etc. If the version of BIOS stored in the memory **204** of the service server **20** is newer than the currently used BIOS, the output device **203** automatically transmits and downloads the new version BIOS to the personal computer **11 (Step SE)**. Upon receipt of the new version BIOS, the personal computer **11** automatically executes the updating procedure to update its BIOS (**Step SF**). The aforesaid steps are set to run in the background especially when Internet is idle, and these running steps use only about 5% bandwidth, which does not affect the foreground web site browsing action.

In the same way, new version driver programs for newly replaced computer peripheral apparatus such as hard diskdrive, CD-ROM player, display card, sound card, keyboard, mouse, and etc., can be download from the service server **20** to the personal computer **11** actually and actively, which raises the image of the hardware company.

Because the service server **20** automatically selects the right new version program file(s) for the client computer, human error is eliminated, and the version of program file(s) in client computer is always remain the newest, much hardware service burden can be eliminated from the hardware provider.

The aforesaid method of actively updating program file(s) of the hardware of a client computer can be carried out by means of a software program, and the software program can be directly stored, or compressed and then stored in a microprocessor recognizable, readable medium, or article or device containing such medium. The article or device containing such medium can be a CD-ROM, hard disk, floppy disk, ROM (read only memory), RAM (random access memory), IC chip, or plug-in memory means such as SMART card or Flash. Because the method of actively updating program file(s) has been fully disclosed, any person skilled in computer program language knows how to write the software program after having read the description of the present invention, details regarding the software program are not described herein.

It is to be understood that the drawings are designed for purposes of illustration only, and are not intended for use as a definition of the limits and scope of the invention disclosed.

## Claims

1. A method for actively updating program file(s) of a client computer (11), the program file(s) is required for running the hardware of the client computer, the method being **characterised in that** it comprises the steps of:
(A) connecting the client computer (11) to Internet (2);
(B) connecting the client computer to a service server (20);
(C) driving the service server (20) to read the model of the hardware of the client computer (11) and to search out the new version program file(s) corresponding to the model of the hardware of the client computer, and to read out the current version of program file(s) currently used in the hardware of the client computer;
(D) comparing the searched out new version program file(s) with the program file(s) currently used in the hardware of the client computer to see which is newer; and
(E) downloading the new version program file(s) to the client computer if the searched out new version program file(s) is newer than the program file(s) currently used in the hardware of the client computer.

2. The method of claim 1 **characterised in** further comprising the step of (F) driving the client computer (11) to automatically execute the updating procedure for the new version program file(s) after the step of (E).

3. The method of claim 1 or claim 2 **characterised in that** said new version program file(s) is stored in said service server (20).

4. The method of any preceding claim **characterised in that** said hardware of said client computer (11) is a motherboard, and said program file(s) is BIOS (basic input/output system).

5. The method of any of claims 1 to 3 **characterised in that** said hardware of said client computer (11) is a computer peripheral apparatus, and said program file(s) is a driver program(s).

6. An apparatus using a service server (20) in Internet (2) for actively updating program file(s) of a client computer (11) after connecting the client computer to the service server, the program file(s) being required for running the hardware of the client computer, the apparatus being **characterised in that** it comprises:
a fetching means (201) adapted to read the model of the hardware of the client computer (11) and to search out the new version of program file(s) corresponding to the model of the hardware of the client computer, and to read out the current version of program file(s) currently used in the hardware of the client computer;
a comparing means (202), adapted to compare the searched out new version program files(s) with the program file(s) currently used in the hardware of the client computer to see which is newer; and
an output means (203), adapted to download the new version program file(s) to the client computer if the new version program file(s) is newer than the program file(s) currently used in the hardware of the client computer.

7. The apparatus of claim 6 **characterised in that** it further comprises memory means (204) adapted to store said new version of program file(s).

8. The apparatus of claim 6 or claim 7 **characterised in that** said hardware of said client computer (11) is a motherboard, and said program file(s) is BIOS ( basic input/output system).

9. The apparatus of claim 6 or claim 7 **characterised in that** said hardware of said client computer (11) is a computer peripheral apparatus, and said program file(s) is a driver program(s).

10. A computer readable medium adapted to be used in a service server (20) in Internet, said computer readable medium being **characterised in** having a software program store therein to actively update program file(s) of a client computer (11) after connecting the client computer to the service server, the program file(s) being required for running the hardware of the client computer, said software program comprising:
first program code means, adapted to read the model of the hardware of the client computer and to search out the new version of program file(s) corresponding to the model of the hardware of the client computer, and to read out the current version of program file(s) currently used in the hardware of the client computer;
second program code means, adapted to compare the searched out new version of program files(s) with the program file(s) currently used in the hardware of the client computer to see which is newer; and
third program code means, adapted to download the new version of program file(s) to the client computer if the new version of program file(s) is newer than the program file(s) currently used in the hardware of the client computer.

11. The computer readable medium of claim 10 **characterised in that** said new version of program file(s) is stored in said service server (20).

12. The computer readable medium of claim 10 or claim 11
**characterised in that** said hardware of said client computer (11) is a motherboard, and said program file(s) is BIOS (basic input/output system).

13. The computer readable medium of claim 10 or claim 11 **characterised in that** said hardware of said client computer (11) is a computer peripheral apparatus, and said program file(s) is a driver program(s).
